# EUROPÄISCHE PATENTSCHRIFT

(11) **EP 2 908 152 B1**
(45) Veröffentlichungstag und Bekanntmachung des Hinweises auf die Patenterteilung: **08.06.2016**
(21) Anmeldenummer: 14198082.1
(22) Anmeldetag: 16.12.2014
(51) Int. Cl.: G01S 7/481, G01S 17/42, G02B 26/10

(54) **Optoelektronischer Sensor und Verfahren zur Erfassung von Objekten in einem Überwachungsbereich**
Optoelectronic sensor and method for detecting objects in a surveillance area
Capteur optoélectronique et procédé destiné à la détection d'objets dans une zone de surveillance

(30) Priorität: 18.02.2014 DE 102014102049
(43) Veröffentlichungstag der Anmeldung: 19.08.2015
(73) Patentinhaber: SICK AG, 79183 Waldkirch (DE)
(72) Erfinder: Nübling, Ralf Ulrich, 79211 Denzlingen (DE); Pastor, Sebastian, 79194 Gundelfingen (DE)
(74) Vertreter: Hehl, Ulrich

(56) Entgegenhaltungen:
- DE-A1- 3 128 350
- JP-A- S6 012 527
- US-A1- 2005 246 065
- US-A1- 2010 073 749
- US-B1- 6 373 612

## Beschreibung

Die Erfindung betrifft einen optoelektronischen Sensor und ein Verfahren zur Erfassung von Objekten nach dem Oberbegriff von Anspruch 1 beziehungsweise 7.

Scanner werden für vielfältige Überwachungs- und Vermessungsaufgaben verwendet. Dazu tastet ein Abtast- oder Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Bekannte Laserscanner weisen einen Drehspiegel oder ein Polygonrad auf, um periodisch eine Überwachungsebene oder ein Segment einer Überwachungsebene abzutasten. Viele Anwendungen erfordern aber die Abtastung eines dreidimensionalen Raumbereichs und nicht lediglich einer Fläche. Ein herkömmlicher Ausweg besteht darin, für eine Relativbewegung zwischen Laserscanner und Objekt zu sorgen, wie beispielsweise in der DE 197 41 730 B4. Dies erfordert erheblichen Aufwand, und zahlreiche Anwendungen eignen sich gar nicht für eine solche kontrollierte Relativbewegung.

Um eine Bewegung des Laserscanners gegenüber dem zu vermessenden Objekt zu vermeiden, werden Laserscanner zu einem 3D-Scanner weitergebildet. Als Schritt hin zu einem 3D-Scanner kann eine Mehrebenenabtastung erreicht werden, indem Rasterspiegel mit unterschiedlich geneigten Facetten als Ablenkeinheit verwendet werden. Dadurch entsteht ein Winkelversatz der jeweils zu einer Facette gehörigen Abtastebene. Zugleich wird aber der Scanwinkelbereich der jeweiligen Abtastebene auf den Winkelanteil der Facette von typischerweise weniger als 100° beschränkt. Ein weiterer nachteiliger Effekt ist, dass nur die zentrale Scanebene wirklich eine Ebene ist, denn mit zunehmender Neigung der Facetten werden die Scanebenen aufbaubedingt unsymmetrisch verbogen. Besonders bei einer größeren Auffächerung der Scanebenen entstehen kaum brauchbare bogenförmige Scanlinien.

Als weiterer Lösungsansatz ist bekannt, eine zusätzliche Ablenkeinheit meist in Form eines Schwingspiegels zu verwenden, der für eine Ablenkung des Scanstrahls in einer zweiten Richtung sorgt. Dadurch kann die Abtastebene verschwenkt werden. Durch die Verwendung zweier Ablenkeinheiten entstehen aber erhöhte Kosten und ein größerer Bauraumbedarf, somit ein hoher optischer und mechanischer Aufwand, zudem mit zusätzlichen Sende- und Empfangssignalverlusten. In einer speziellen Lösung mit zusätzlichem Schwingspiegel gemäß DE 20 2009 012 114 U1 wird der 360°-Abtastbereich eines Drehspiegels aufgeteilt. In einem vorderen Winkelbereich wird in herkömmlicher Weise eine Fläche abgetastet. In einem hinteren Winkelbereich wird der Abtaststrahl mehrfach umgelenkt und fällt dann auf einen Schwingspiegel, der in einer Richtung quer zu der Ablenkrichtung des Drehspiegels verschwenkt wird. Somit wird über den hinteren Winkelbereich ein Raumausschnitt anstelle einer Fläche abgetastet.

Die Überwachung dreidimensionaler Abtastbereiche wird auch dadurch erreicht, dass der Drehspiegel und damit die Drehachse und die Abtastebene zusätzlich zu der Drehbewegung verkippt wird. In der DE 10 2008 032 216 A1 beispielsweise wird die gesamte Scaneinheit samt Sender, Empfänger und Drehspiegel auf einem Ablenkteller angeordnet. Durch Verschwenken des Ablenktellers wird dann die Scanebene variiert, um so insgesamt einen dreidimensionalen Raumbereich zu überwachen. Dies erfordert aber erheblichen Zusatzaufwand für den Ablenkteller und den zusätzlichen Verschwenkantrieb. Die EP 1 965 225 A2 offenbart eine weitere Laserradarvorrichtung für die dreidimensionale Erfassung von Objekten, deren Ablenkeinheit durch eine Vielzahl vorgeschlagener Mechanismen zusätzlich verkippt wird. So verwenden einige Ausführungsformen für die Kippbewegung einen zweiten Antrieb zusätzlich zu dem Drehmotor, beispielsweise indem eine rotierende Kurvenscheibe in direkten Kontakt mit dem Drehspiegel gebracht wird. Dementsprechend muss aber der zweite Antrieb vorgesehen, angesteuert und synchronisiert werden. In einer anderen Ausführungsform sind zwei radial um 180 ° gegeneinander versetzt von der Ablenkeinheit nach außen stehende Drehglieder mit Rollen vorgesehen, die in einem Hohlprofil eines Führungspfads laufen. Dadurch wird der Drehbewegung eine Kippbewegung überlagert, die durch die Geometrie des Führungspfades erzwungen wird. Der vorgestellte Führungspfad ist aber ungeeignet, ein Abtastmuster über mehr als eine Umdrehung auszudehnen und beispielsweise einen Mehrebenenscanner auszubilden.

Die US 6 373 612 B1 offenbart einen Laserscanner, dessen Spiegel in einen Mechanismus zur Variation der Kippstellung eingebaut ist. Dazu läuft ein Rädchen im Verlauf der Drehbewegung des Spiegels auf einem Höhenprofil in Form einer Dreieckswelle, und die Höhenunterschiede werden über eine Zahnstange auf die horizontale Achse des Spiegels und damit dessen Kippstellung übertragen.

In der US 2005/0246065 A1 versetzt in einem Laserscanner ein Motor zwei konzentrische Zylinder jeweils in eine Drehbewegung, und zwar durch Zahnräder mit unterschiedlicher Drehgeschwindigkeit. Der äußere Zylinder trägt den Spiegel und einen Kipphebel mit einem Rädchen. Dieses Rädchen läuft auf einem Höhenprofil des inneren Zylinders, so dass über den Kipphebel der Kippwinkel des Spiegels variiert wird. Es ergibt sich eine räumliche Abtastkurve, die von den beiden Drehgeschwindigkeiten abhängt.

Die JP S60 12527 A beschreibt einen Infrarotscanner, der ein Gehäuse mit Sender und Empfänger und einem Motor aufweist, wobei der Motor das Gehäuse gegenüber einem Träger in Drehbewegung versetzt. Über einen Getriebemechanismus mit mehreren Zahnrädern und Stangen wird die Drehbewegung zudem auf die Kippstellung eines Spiegels übertragen.

Aus der US 2010/0073749 A1 ist ein Scanner für eine mobile Vorrichtung bekannt, dessen Drehspiegel zugleich verkippt wird. Dazu ist ein erstes Zahnrad auf der vertikalen Achse des Antriebs für den Drehspiegel vorgesehen, das in Gewindeeingriff mit zwei weiteren Zahnrädern in senkrechter Anordnung zu dem ersten Zahnrad steht. Mit den weiteren Zahnrädern dreht sich auch eine senkrecht zu der vertikalen Achse stehende horizontale Achse, auf der wiederum zwei Kurvenscheiben mitrotieren. Sie sorgen durch ihre gegenläufig unterschiedlichen Radien für die gewünschte Kippbewegung eines Rahmens des Drehspiegels.

Vor diesem Hintergrund ist Aufgabe der Erfindung, die Erweiterung des Überwachungsbereichs eines optoelektronischen Sensors mit einfachen Mitteln zu ermöglichen.

Diese Aufgabe wird durch einen optoelektronischen Sensor und ein Verfahren zur Erfassung von Objekten nach Anspruch 1 beziehungsweise 7 gelöst. Der erfindungsgemäße Sensor überwacht mehr als nur eine Abtastebene, indem dessen Ablenkeinheit zusätzlich zu ihrer Drehbewegung eine Kippbewegung vollzieht, welche die Drehachse und damit die Abtastebene variiert. Dadurch kann mit einfachen Mitteln ein Raumbereich überwacht werden, der größer ist als die durch reine Rotation der Ablenkeinheit entstehende Abtast- oder Scanebene. Die Erfindung geht von dem Grundgedanken aus, die Drehbewegung und die Kippbewegung durch ein Getriebe aneinander zu koppeln. Das Getriebe versetzt ein Profilrad in eine Drehbewegung, die aufgrund einer Untersetzung langsamer ist als diejenige der Ablenkeinheit. Ein Führungselement überträgt die Geometrie des Profils in eine Kippauslenkung der Ablenkeinheit. Aufgrund einer Untersetzung des Getriebes erstreckt sich die Kippbewegung über mehrere Drehungen der Ablenkeinheit, so dass über die Verkippung unterschiedliche Abtastebenen eingestellt werden. Vorzugsweise ist eine Feder oder ein ähnliches Element vorgesehen, um eine Gegenkraft auf das Führungselement auszuüben und dieses stets in engem Eingriff mit dem Profil zu halten. Auch andere Methoden zur spielfreien Führung sind denkbar.

Eine Erfassung eines Objekts beinhaltet bei Laserscannern zumeist auch eine Positionsbestimmung durch Messen des Abstands mit einem der einleitend genannten Lichtlaufzeitverfahren, Bestimmen des Drehwinkels der Ablenkeinheit über einen Winkelencoder sowie des Kippwinkels anhand des Drehwinkels und dem bekannten winkelabhängigen Verlauf der Kippbewegung. Dadurch sind Radius und beide Winkel dreidimensionaler Kugelkoordinaten bestimmt.

Die Erfindung hat den Vorteil, dass weder ein zusätzlicher Antrieb noch eine zusätzliche Ablenkeinheit erforderlich ist, um die Abtastebene zu variieren. Dadurch können Herstellkosten, Baugröße, mechanische Anfälligkeit und Stromaufnahme reduziert werden. Die Vorgabe der Verkippung ermöglicht dabei eine Anpassung der Abtastung an die jeweilige Anwendung. Das Getriebe und das Profilrad sorgen für eine .verlässliche, harmonische Kippbewegung, und die Erzeugung der Kippbewegung ist zugleich robust und wartungsarm gelöst.

Das Profilrad ist in einer beanspruchten Alternative als Kurvenscheibe ausgebildet. Das Führungselement läuft dabei an dessen Außenumfang und überträgt damit die verschiedenen Radien der Kurvenscheibe in entsprechende Kippwinkel der Ablenkeinheit. Die Geometrie der Kurvenscheibe gibt so auf sehr einfache Weise eine gewünschte Kippbewegung und damit ein Abtastmuster vor.

Die Kurvenscheibe weist dazu mehrere Segmente mit jeweils konstantem, aber zwischen den Segmenten unterschiedlichem Radius sowie Verstellbereichen dazwischen auf. In den Bereichen mit konstantem Radius, die also Kreisbögen bilden, ändert sich der Kippwinkel nicht. Jedes Segment legt damit über den Radius eine Abtastebene fest, die zueinander entsprechend der Unterschiede in den Radien zwischen den Segmenten beabstandet sind. So entsteht ein Mehrebenenscanner. Die Verstellbereiche gleichen die unterschiedlichen Radien von Segment zu Segment durch entsprechende Anstiege oder Gefälle aus, und zwar nach Möglichkeit so, dass sich eine glatte Gesamtkontur und damit ruhige Kippbewegung ergibt. Alternativ zu der beanspruchten Ausgestaltung kann die Kurvenscheibe aber auch eine beliebige Geometrie etwa mit ständig veränderten Radien aufweisen, so dass die Verkippung kontinuierlich variiert und es keine Abtastebene im eigentlichen Sinne mehr gibt, sondern nur noch einen von dem Abtaststrahl durch die Überlagerung der Drehbewegung und der Verkippung erfassten Raumbereich.

Das Profilrad ist in einer anderen beanspruchten Ausführungsform als Höhenprofilrad ausgebildet. Hier läuft das Führungselement nicht wie bei einer Kurvenscheibe am Außenumfang, sondern auf der Radfläche. Diese Radfläche ist nicht eben, sondern weist ein Höhenprofil entsprechend der gewünschten Kippbewegung auf. Hinsichtlich der möglichen Ausgestaltungen des Höhenprofilrads gilt das gleiche wie für eine Kurvenscheibe. Entsprechend ist auch das Profil des Höhenprofilrads in Bereiche jeweils gleicher Höhe segmentiert sein, wobei diese Höhe von Segment zu Segment variiert, um einen Mehrebenenscanner zu realisieren. Zwischen den Segmenten befinden sich dann Anstiege oder Gefälle als Übergangsbereiche, in denen das Führungselement die Höhe wechselt. Dabei findet nur Rollreibung statt, und die Mechanik wird besonders verschleißunanfällig.

Das Getriebe ist bevorzugt als Schneckengetriebe mit einer um die Drehachse angeordneten feststehenden Schnecke und einem seitlich in die Schnecke eingreifenden Zahnrad der Kippeinheit ausgebildet. Die Schnecke sorgt praktisch dafür, dass die Welle einen helixartigen Zahnverlauf aufweist, in welchen das Zahnrad von der Seite her eingreift. Das Zahnrad dreht sich dann vorzugsweise auf einer Achse mit dem Profilrad.

Alternativ ist das Getriebe als Torusgetriebe mit einem senkrecht zu der Drehachse angeordneten feststehenden Torusrad, das auf einer Radfläche einen spiralförmigen Zahnverlauf aufweist, und einem senkrecht zu dem Torusrad in den Zahnverlauf eingreifenden Zahnrad der Kippeinheit ausgebildet. Statt einer Helix auf einem Zylindermantel um die Antriebswelle bildet hier der Zahnverlauf eine Spirale auf einer Kreisfläche. Von oben her greift das Zahnrad in den Zahnverlauf ein und wird darin gleitend zum Drehen gebracht. Das Torusgetriebe ist besonders kompakt, wartungsarm und laufruhig.

Das Profilrad ist in beiden Fällen bevorzugt als Kurvenscheibe ausgebildet und rotiert auf einer Achse mit dem Zahnrad. Schneckengetriebe wie Torusgetriebe übertragen nämlich die Drehbewegung auf eine um 90° verkippte Drehachse, und genau eine in dieser Orientierung rotierende Kurvenscheibe ist geeignet, die Ablenkeinheit über ein gerades Führungselement zu verkippen.

In einer weiteren Alternative ist das Getriebe als Stirngetriebe mit einem um die Drehachse angeordneten feststehenden ersten Zahnrad und einem daneben angeordneten zweiten Zahnrad ausgebildet, das durch Eingriff in das erste Zahnrad um eine Achse parallel zu der Drehachse rotiert. Ein solches Getriebe ist besonders einfach.

In diesem Fall ist das Profilrad bevorzugt als Höhenprofilrad ausgebildet und rotiert auf einer Achse mit dem zweiten Zahnrad. Das Stirngetriebe überträgt die Drehbewegung auf eine parallele statt einer um 90° verkippten Drehachse, und deshalb eignet sich hier nicht eine Kurvenscheibe, sondern ein Höhenprofilrad dazu, über ein gerades Führungselement die Drehbewegung des Profilrads in eine Kippbewegung der Ablenkeinheit zu übersetzen. Das Höhenprofil kann unmittelbar auf dem zweiten Zahnrad vorgegeben werden. Diese einstückige Ausführung ermöglicht den Verzicht auf ein Bauteil.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Laserscanners mit einem untersetzten Getriebe zum Verkippen der Ablenkeinheit mit der Drehbewegung;
- Fig. 2: eine dreidimensionale Ansicht einer Ausführungsform der Kopplung von Dreh- und Kippbewegung über ein Schneckengetriebe;
- Fig. 3: eine Ausschnittvergrößerung der Figur 2 des Eingriffs eines Führungselemente der Ablenkeinheit und einer durch das Schneckengetriebe an die Drehbewegung angekoppelten Kurvenscheibe;
- Fig. 4: eine dreidimensionale Ansicht einer Ausführungsform der Kopplung von Dreh- und Kippbewegung über ein Torusgetriebe;
- Fig. 5: eine Ausschnittvergrößerung der Figur 4 des Eingriffs eines Führungselemente der Ablenkeinheit und eines durch das Torusgetriebe an die Drehbewegung angekoppelten Höhenprofilrades;
- Fig. 6: eine dreidimensionale Ansicht einer Ausführungsform der Kopplung von Dreh- und Kippbewegung über ein Stirngetriebe; und
- Fig. 7: eine Ausschnittvergrößerung der Figur 6 des Eingriffs eines Führungselemente der Ablenkeinheit und einer durch das Stirngetriebe an die Drehbewegung angekoppelten Kurvenscheibe.

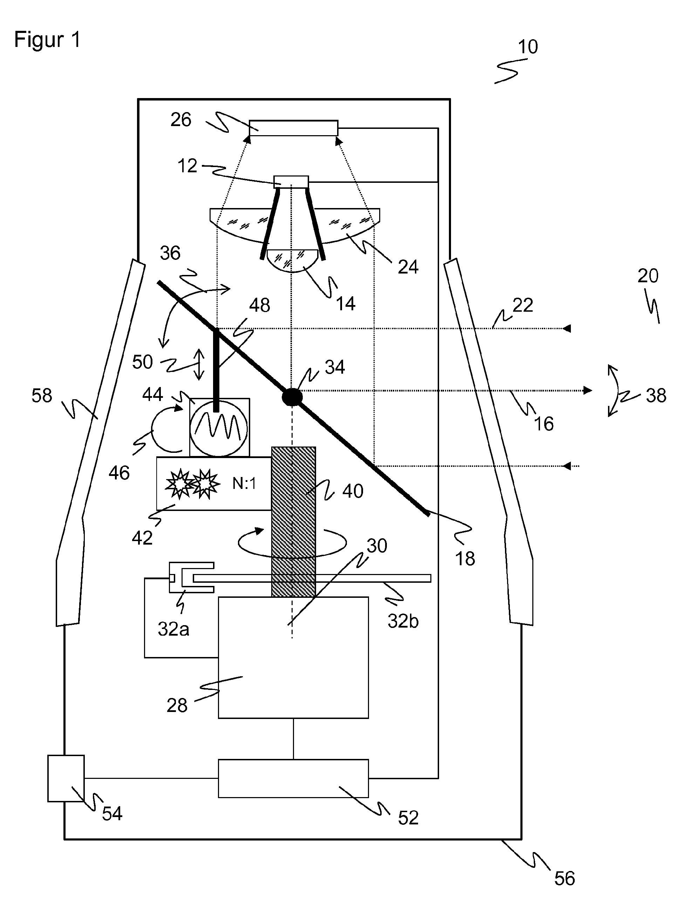

Figur 1 zeigt eine Schnittdarstellung eines Laserscanners 10. Es sind diverse andere Anordnungen der einzelnen Elemente eines optoelektronischen Sensors zur Erfassung von Objekten denkbar und von der Erfindung umfasst. Insbesondere gibt es eine Vielzahl bekannter Varianten von Laserscannern, aus denen jeweils durch entsprechende Abwandlung erfindungsgemäße Laserscanner entstehen können. Die Darstellung soll also nur beispielhaft zu verstehen sein.

Ein Lichtsender 12, beispielsweise eine LED oder eine Laserdiode, sendet über eine Sendeoptik 14 einen Sendelichtstrahl oder Abtaststrahl 16 aus, der nach Ablenkung an einer Ablenkeinheit 18 aus dem Laserscanner 10 in einen Überwachungsbereich 20 austritt. Wird von dem Sendelichtstrahl 16 ein Objekt angetastet, so kehrt reflektiertes oder remittiertes Licht 22 zu dem Laserscanner 10 zurück und wird nach erneuter Ablenkung an der Ablenkeinheit 18 von einer Empfangsoptik 24 auf einen Lichtempfänger 26 gebündelt. Es ist denkbar, eine Kanaltrennung zwischen Sendepfad und Empfangspfad etwa durch einen drehfest mit der Ablenkeinheit verbundenen, nicht dargestellten Tubus um den Sendelichtstrahl 16 vorzunehmen.

Ein Antrieb 28 versetzt die Ablenkeinheit 18 in eine Drehbewegung bezüglich einer Drehachse 30. Die jeweilige Winkelstellung wird von einem Encoder bestimmt, der beispielsweise eine Gabellichtschranke 32a und eine Strichscheibe 32b aufweist. Im Verlauf der Drehbewegung würde der Abtaststrahl 16 bei konstantem Kippwinkel zwischen Ablenkeinheit 18 und Drehachse 30 eine zu der Drehachse 30 senkrechte Abtastebene periodisch abtasten.

Die Ablenkeinheit 18 ist aber an einem Gelenkpunkt 34 wie durch einen Pfeil 36 angedeutet verkippbar gelagert, was zu einer durch einen Pfeil 38 angedeuteten Winkelabweichung des Abtaststrahls 16 führt. Somit wird anstelle einer einfachen Abtastebene ein Raumbereich mit einer Abtastkurve erfasst, die von der überlagerten Dreh- und Kippbewegung abhängt.

Die Verkippung der Ablenkeinheit 18 wird ebenso wie die Drehbewegung vom gleichen Antrieb 28 bewirkt. Dazu wird die Drehbewegung einer Welle 40 des Antriebs 28 über ein untersetztes Getriebe 42 auf ein Profilrad 44 übertragen. Das Profilrad 44 dreht sich also wie durch einen Pfeil 46 angedeutet mit der Welle 40, jedoch entsprechend der Untersetzung langsamer. Die Drehachse des Profilrads 44 hängt von der Art des Getriebes 42 ab und kann beispielsweise senkrecht oder parallel zu der Drehachse 30 der Welle 40 liegen. Das Profilrad 44 weist eine namensgebende profilierte Geometrie auf, die dafür sorgt, dass sich ein mit dem Profil des Profilrads 44 in Eingriff stehendes Führungselement 48 wie durch einen Pfeil 50 gezeigt mit der Drehung des Profilrads 44 auf und ab bewegt. Das Führungselement 48 steht andererseits mit der Ablenkeinheit 18 in Eingriff oder ist mit ihr verbunden und bewirkt so entsprechend seiner Aufund Abwärtsbewegung die Kippbewegung der Ablenkeinheit 18.

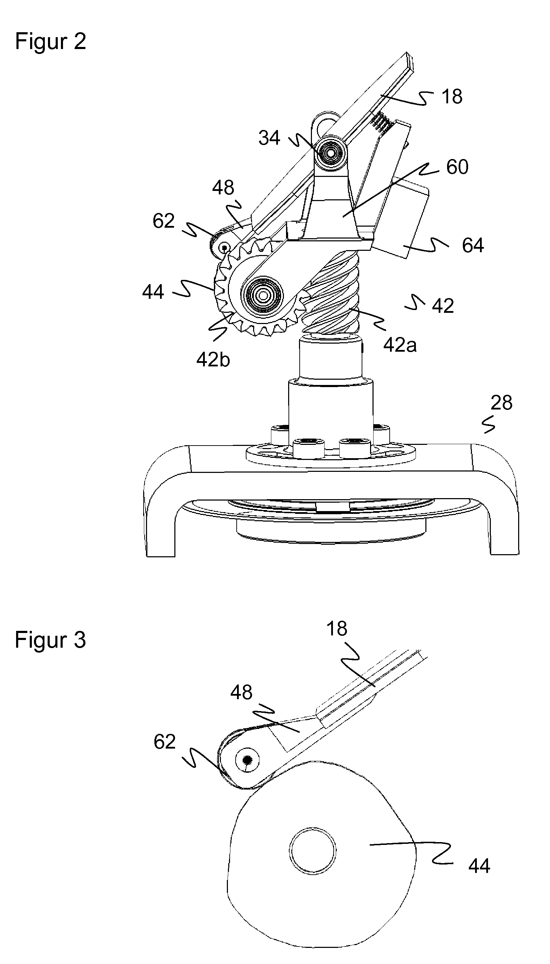

Auf diese Weise genügt ein gemeinsamer Aktor für sowohl die Dreh- als auch die Kippbewegung der Ablenkeinheit 18. Das ist wesentlich kompakter und kostengünstiger als ein prinzipiell denkbarer eigener Antrieb für das Profilrad 44. Dabei zeigt Figur 1 Getriebe 42, Profilrad 44 und Führungselement 48 nur rein schematisch. Weiter unten werden im Zusammenhang mit den Figuren 2 bis 7 verschiedene Beispiele vorgestellt, wie dies mit konkreten mechanischen Elementen erreicht werden kann.

Die Kippbewegung ermöglicht verschiedenste Abtastmuster. In einer bevorzugten Ausführung als Mehrebenenscanner sorgt die Kippbewegung für Wechsel der Abtastebene, jeweils gefolgt von einem Intervall ohne Kippbewegung, um eine dem eingestellten Kippwinkel entsprechende Ebene abzutasten. Das Profilrad 44 wird mit jeder Umdrehung der Welle 40 entsprechend der Untersetzung des Getriebes 42 weitergedreht. Für einen 4-Lagen-Scanner beispielsweise wäre eine Untersetzung von 4:1 zu wählen. Damit dreht sich das Profilrad 44 mit jeder Umdrehung der Welle 40 um 90° weiter. Das Profil ist so ausgebildet, dass über einen Großteil dieser 90° der jeweilige Kippwinkel konstant bleibt, während der verbleibende kleinere Teil den neuen Kippwinkel für die nächste Ebene einstellt. Nach vier Umdrehungen der Welle 40 hat sich auch das Profilrad 44 einmal vollständig gedreht, und das Abtastmuster wiederholt sich.

Bei einem solchen Mehrebenenscanner gehört der Winkelbereich der Drehbewegung, in dem ein neuer Kippwinkel eingestellt wird, zu keiner Abtastebene. Andererseits haben die meisten Laserscanner ohnehin keine 360°-Erfassung, sondern einen gewissen Totbereich. Vorzugsweise wird dann der Verstellbereich des Kippwinkels in den Totbereich gelegt. So sind Abtastungen in allen Ebenen mit Scanwinkeln von 300° und mehr erreichbar. Je nach Anwendung kann der Verstellbereich auch messtechnisch genutzt und damit eine 360°-Erfassung erreicht werden.

Die Kippbewegung ist selbstverständlich nicht auf dieses Beispiel beschränkt. Zunächst einmal lassen sich durch eine andere Untersetzung des Getriebes 42 und ein anderes Profil des Profilrads 44 wenige bis sehr viele Abtastebenen anstelle von vier Abtastebenen realisieren. Allgemein sind je nach Anforderung der Anwendung nahezu beliebige Raummuster erreichbar, etwa um gerade Scanlinien auf einer ebenen Wand zu erreichen, einen Doppelkegel helixartig abzutasten und dergleichen.

Durch die kontinuierliche Dreh- und Kippbewegung, die sich auch nach einer vollständigen Umdrehung des Profilrads 44 ohne besonderen Rücklauf mit einer Wiederholung fortsetzt, ergibt sich ein harmonischer, ruhiger Lauf von großer Lebensdauer. Alle Reibbewegungen können lediglich abrollend mit robusten, laufruhigen Bauteilen wie Kugellagern ausgelegt werden, beziehungsweise Kippbewegungen mittels Blattfedern. Die Kopplungen, etwa diejenige zwischen Ablenkeinheit 18, Führungselement 48 und Profilrad 44, können vorzugsweise jeweils durch Federn oder ähnliche Elemente spielfrei gehalten werden.

Bevor nun einige konkretisierte Ausführungsbeispiele erläutert werden, soll noch die Beschreibung des Laserscanners 10 gemäß Figur 1 abgeschlossen werden. Eine Steuer- und Auswertungseinheit 52 ist mit dem Lichtsender 12 und dem Lichtempfänger 26 verbunden, um den Sendelichtstrahl 16 zu erzeugen und ein aus remittiertem Licht 22 in dem Lichtempfänger 26 erzeugtes Empfangssignal auszuwerten. Bei dieser Auswertung wird festgestellt, ob ein Objekt erfasst wurde. Die Steuer- und Auswertungseinheit 52 steuert außerdem den Antrieb 28 und erhält das Winkelsignal des Encoders 32a-b.

Vorzugsweise nimmt die Steuer- und Auswertungseinheit 52 mit der Erfassung der Objekte auch eine Positionsbestimmung vor. Dazu werden die drei Kugelkoordinaten bestimmt. Der Abstand wird mit einem der einleitend genannten Lichtlaufzeitverfahren gemessen. Der erste Winkel bezüglich der Drehbewegung für die Erfassung eines Objekts ist von dem Encoder 32a-b unmittelbar bekannt. Den zweiten Winkel bestimmt die Steuer- und Auswertungseinheit 52 als den Kippwinkel. Der jeweils zu einer Drehstellung des Profilrads 44 gehörige Kippwinkel wird dazu 44 parametriert oder eingelernt. Da die aktuelle Drehstellung des Profilrads 44 über das Getriebe 42 direkt mit der von dem Encoder 32a-b bestimmten Drehstellung der Welle 40 zusammenhängt, kennt die Steuer- und Auswertungseinheit 52 dann auch den zweiten Winkel. Wegen der Untersetzung des Getriebes 42 muss dabei die Drehstellung der Welle 40 über mehr als eine Drehung, also beispielsweise bei einer Untersetzung von 4:1 wie für einen 4-Lagen-Scanner über 4*360°=1440° erfasst werden. Es ist aber auch denkbar, die Drehstellung des Profilrads 44 oder die Kippstellung der Ablenkeinheit 18 mit weiteren Sensoren beziehungsweise über den Sendestrahl 16 zu bestimmen.

Das gewünschte Ergebnis der Auswertung wird an einem Ausgang 54 bereitgestellt, sei es beispielsweise als binäres Objektfeststellungssignal insbesondere für sicherheitstechnische Anwendungen, als Objektliste mit Koordinaten der Erfassung oder als zwei- beziehungsweise dreidimensionales Rohbild.

Der Laserscanner 10 wird von einem Gehäuse 56 geschützt, das im Aus- und Eintrittsbereich der Lichtstrahlen 16, 22 eine Frontscheibe 58 aufweist, die für die jeweilige Wellenlänge transparent ist, also beispielsweise für sichtbares, infrarotes und/oder ultraviolettes Licht.

Figur 2 zeigt in einer dreidimensionalen Ansicht eine Ausführungsform der Kopplung von Dreh- und Kippbewegung über ein Schneckengetriebe. Im unteren Teil befindet sich der statische Teil, der nur als fester Sockel gezeigt und stellvertretend mit dem Bezugszeichen des Antriebs 28 versehen ist. Im oberen Teil ist die hier als Drehspiegel ausgebildete Ablenkeinheit 18 gezeigt, die samt einem Spiegelhalter 60 durch die im Inneren verlaufende und daher nicht sichtbare Welle 40 in Drehbewegung versetzt wird. Das Schneckengetriebe umfasst eine ruhende, am statischen Teil fixierte Schnecke 42a mit einer inneren Bohrung für die Welle 40 und ein in die Schnecke 42a eingreifendes, mit dem Spiegelhalter 60 mitbewegtes Zahnrad 42b. Das Profilrad 44 dreht sich auf einer Achse mit dem Zahnrad 42b oder ist damit ein gemeinsames Bauteil und hier als Kurvenscheibe ausgebildet. Das Führungselement 48 liegt mit einem Laufrad 62 auf dem Umfang des Profilrads 44 auf und drängt somit die Ablenkeinheit 18 je nach Radius des Profilrads 44 an der Berührungsstelle in eine definierte Kippposition bezüglich dem Gelenkpunkt 34. Gegenüber dem Zahnrad 42b weist der Spiegelhalter 60 noch ein Wuchtgewicht 64 auf, um die rotierende Masse bezüglich der Drehachse auszubalancieren.

Figur 3 zeigt eine Ausschnittvergrößerung der Kopplung von Profilrad 44 und Führungselement 48 gemäß Figur 2. Durch den Eingriff des Zahnrads 42b in die Schnecke 42a wird das Profilrad 44 in eine Drehbewegung um eine Achse senkrecht zur Drehachse der Ablenkeinheit 18 versetzt. Entsprechend der Untersetzung des Getriebes dreht sich das Profilrad 44 langsamer, beispielsweise nur einmal je drei oder vier Umdrehungen der Ablenkeinheit 18. Dadurch überlagert sich der Drehbewegung der Ablenkeinheit 18 eine entsprechend verlangsamte Kippbewegung, die sich erst nach mehreren Umdrehungen wiederholt.

Das Profilrad 44 weist bevorzugt mehrere Kreissegmente mit jeweils konstantem Radius auf. Während das Laufrad 62 auf einem solchen Teil des Profilrads 44 abläuft, wird so der Kippwinkel konstant gehalten und eine bestimmte Ebene abgetastet. Zwischen den Kreissegmenten befinden sich Bereiche mit positiver oder negativer Steigung, welche zwischen den jeweiligen konstanten Radien ausgleichen und dadurch einen neuen Kippwinkel einstellen. Die Kippbewegung und damit auch die Gesamtbewegung der Ablenkeinheit 18 kann sehr ruhig gehalten werden, indem die jeweiligen Hübe in den Verstellbereichen klein bleiben. Beispielsweise werden vier Abstastebenen mit einem Kippwinkel von jeweils 2,5° eingestellt.

Um den Kippwinkel auch im Rücklauf klein zu halten, können die Abtastebenen in einer versetzten Auf- und Abwärtstreppe eingestellt werden. Dazu werden beispielsweise bei sieben Abtastebenen nacheinander die Winkel -7,5 °, -2,5°, +2,5°, +7,5°, 5°, 0°, -5° eingestellt. Auf diese Weise wird ein abschließender Rücklauf über die maximale Verkippung von 7,5° zu -7,5°, also insgesamt 15° vermieden, und kein Hub ist größer als 5°.

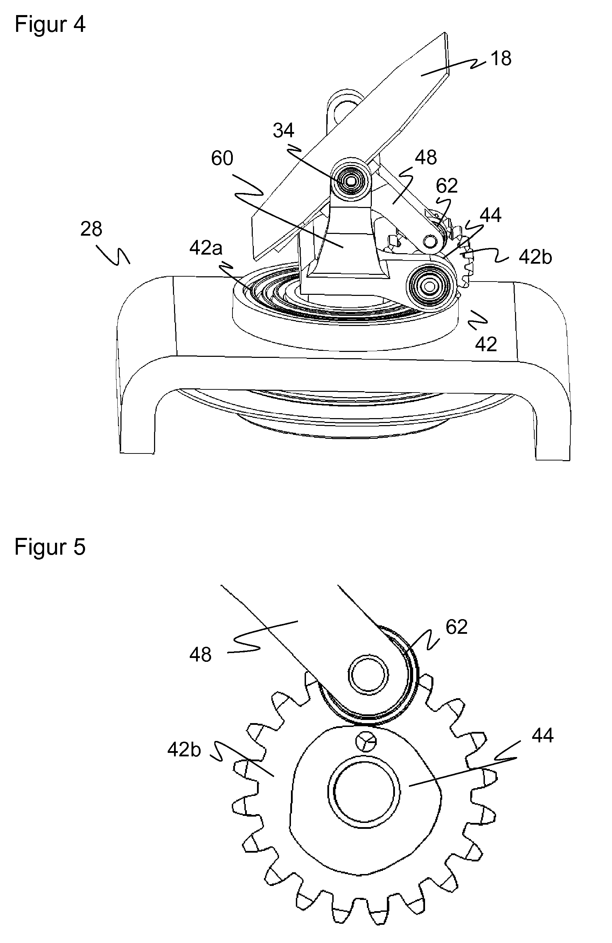

Figur 4 zeigt in einer dreidimensionalen Ansicht eine weitere Ausführungsform der Kopplung von Dreh- und Kippbewegung über ein Torusgetriebe, und Figur 5 ist eine zugehörige Ausschnittvergrößerung der Kopplung von Profilrad 44 und Führungselement 48 gemäß Figur 4. Wie in der gesamten Beschreibung, bezeichnen gleiche Bezugszeichen die gleichen oder einander entsprechenden Merkmale.

Im Unterschied zu der Ausführungsform gemäß Figuren 2 und 3 ist hier der fixe Teil des Getriebes 42 eine Torusscheibe 42a, die einen spiralförmigen statt eines helixartigen Zahnverlauf aufweist. Im Prinzip ist der dreidimensionale Zahnverlauf auf einem Zylindermantel einer Schnecke von oben her auf eine Kreisfläche der Torusscheibe zusammengestaucht. Ein Torusgetriebe ermöglicht eine geringere Bauhöhe und einen besonders ruhigen, eng gekoppelten Lauf. Von den unterschiedlichen Getrieben abgesehen, entsprechen sich die beiden Ausführungsformen gemäß Figuren 2 und 3 beziehungsweise gemäß Figuren 4 und 5 weitgehend. Insbesondere dreht sich das Zahnrad 42b auch bei einem Torusgetriebe um eine Achse senkrecht zu der Drehachse der Welle 44, und das Profilrad 44 ist ebenfalls eine Kurvenscheibe mit allen dazu denkbaren geometrischen Ausgestaltungen.

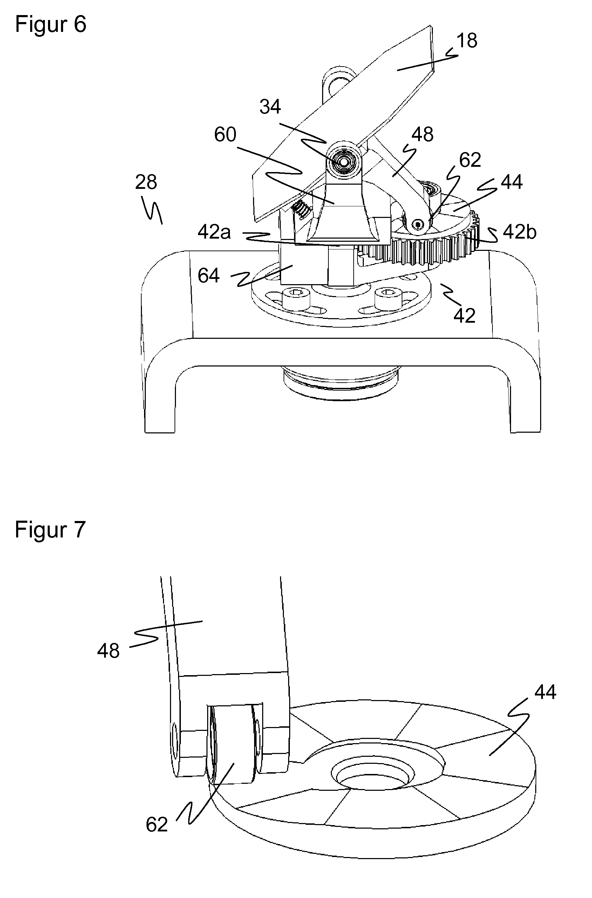

Figur 6 zeigt in einer dreidimensionalen Ansicht eine weitere Ausführungsform der Kopplung von Dreh- und Kippbewegung über ein Stirngetriebe, und Figur 7 ist eine zugehörige Ausschnittvergrößerung der Kopplung von Profilrad 44 und Führungselement 48 gemäß Figur 4. Erneut entspricht diese Ausführungsform weitgehend den früher beschriebenen Ausführungsformen.

Das Getriebe 42 ist aber in diesem Fall ein Stirngetriebe mit einem ersten Zahnrad 42a auf der Welle 40, das in Figur 6 innen liegt, daher nicht erkennbar ist und dessen Bezugszeichen nur die Position markiert, und einem mit dem ersten Zahnrad 42a in Stirneingriff stehenden zweiten Zahnrad 42b, das die Bewegung der Ablenkeinheit 18 mitvollzieht. Aufgrund des Stirneingriffs rotiert das zweite Zahnrad 42b um eine Achse parallel zu der Drehachse 30. Deshalb ist in dieser Ausführungsform das Profilrad 44 vorzugsweise nicht als Kurvenscheibe, sondern als Höhenprofilrad ausgebildet. Das bedeutet, dass das Profil nicht durch unterschiedliche Radien am Außenumfang, sondern als Höhenprofil auf einer Fläche des Profilrads angeordnet ist. Wie in Figur 7 leicht erkennbar, sorgt unter den geometrischen Gegebenheiten dieses Höhenprofil für die gewünschte Auf- und Abbewegung des Führungselements 48. Das Höhenprofil kann unmittelbar auf dem zweiten Zahnrad 42b ausgebildet sein, so dass kein zusätzliches Bauteil benötigt wird.

Wie die drei Beispiele eines Schneckengetriebes, Torusgetriebes und Stirngetriebes zeigen mit Kurvenscheibe oder Höhenprofilrad, gibt es zahlreiche Möglichkeiten, die in Figur 1 schematisch gezeigte erfindungsgemäße Konfiguration umzusetzen. Auch andere Getriebe, wie etwa Maltesergetriebe insbesondere bei langsamer Drehbewegung und damit geringer Scanfrequenz, sind möglich.

## Patentansprüche

1. Optoelektronischer Sensor (10), insbesondere Laserscanner, zur Erfassung von Objekten in einem Überwachungsbereich (20) mit mehr als einer Abtastebene, der einen Lichtsender (12) zum Aussenden eines Lichtstrahls (16), einen Antrieb (28) zum Erzeugen einer Drehbewegung, eine von dem Antrieb (28) um eine Drehachse (30) drehbare Ablenkeinheit (18) zur periodischen Ablenkung des Lichtstrahls (16), eine an den Antrieb (28) gekoppelte Kippeinheit (42b, 44) zum Verkippen der Ablenkeinheit (18) mit der Drehbewegung, einen Lichtempfänger (26) zum Erzeugen eines Empfangssignals aus dem in dem Überwachungsbereich remittierten oder reflektierten Lichtstrahl (22) sowie eine Auswertungseinheit (52) aufweist, welche für die Erfassung der Objekte anhand des Empfangssignals ausgebildet ist,
wobei die Kippeinheit (42b, 44) ein Profilrad (44) aufweist, dessen Profil mit einem Führungselement (48) der Ablenkeinheit (18) in Eingriff steht und so die Kippbewegung erzeugt und wobei das Profilrad (44) durch ein Getriebe (42) an den Antrieb (28) angekoppelt ist, um so die Drehbewegung des Antriebs (28) mit einer Untersetzung mitzuvollziehen,
**dadurch gekennzeichnet,**
**dass** das Profilrad (44) als Kurvenscheibe, die mehrere Segmente mit jeweils konstantem, aber zwischen den Segmenten unterschiedlichem Radius sowie Verstellbereichen dazwischen aufweist, oder als Höhenprofilrad ausgebildet ist, das in Bereiche jeweils gleicher Höhe segmentiert ist, wobei diese Höhe von Segment zu Segment variiert.

2. Sensor (10) nach Anspruch 1,
wobei das Getriebe (44) als Schneckengetriebe mit einer um die Drehachse (30) angeordneten feststehenden Schnecke (42a) und einem seitlich in die Schnecke (42a) eingreifenden Zahnrad (42b) der Kippeinheit (42b, 44) ausgebildet ist.

3. Sensor (10) nach Anspruch 1,
wobei das Getriebe (42) als Torusgetriebe mit einem senkrecht zu der Drehachse (30) angeordneten feststehenden Torusrad (42a), das auf einer Radfläche einen spiralförmigen Zahnverlauf aufweist, und einem senkrecht zu dem Torusrad (42a) in den Zahnverlauf eingreifenden Zahnrad (42b) der Kippeinheit (42b, 44) ausgebildet ist.

4. Sensor (10) nach Anspruch 2 oder 3,
wobei das Profilrad (44) als Kurvenscheibe ausgebildet ist und auf einer Achse mit dem Zahnrad (42b) rotiert.

5. Sensor (10) nach Anspruch 1,
wobei das Getriebe (42) als Stirngetriebe mit einem um die Drehachse (30) angeordneten feststehenden ersten Zahnrad (42a) und einem daneben angeordneten zweiten Zahnrad (42b) ausgebildet ist, das durch Eingriff in das erste Zahnrad (42a) um eine Achse parallel zu der Drehachse (30) rotiert.

6. Sensor (10) nach Anspruch 5,
wobei das Profilrad (44) als Höhenprofilrad ausgebildet ist und auf einer Achse mit dem zweiten Zahnrad (42b) rotiert, insbesondere das Höhenprofilrad und das zweite Zahnrad (42b) einstückig ausgebildet sind.

7. Verfahren zur Erfassung von Objekten in einem Überwachungsbereich (20) mit mehr als einer Abtastebene, bei dem ein Lichtstrahl (16) ausgesandt und aus dem in dem Überwachungsbereich (20) remittierten oder reflektierten Lichtstrahl (22) ein Empfangssignal erzeugt und ausgewertet wird, um die Objekte zu erfassen, wobei der Lichtstrahl (16) den Überwachungsbereich (20) mittels einer Ablenkeinheit (18) periodisch abtastet, die durch einen Antrieb (28) in Drehbewegung versetzt und zugleich mit einer an den Antrieb (28) gekoppelten Kippeinheit (42b, 44) verkippt wird, wobei die Drehbewegung das Verkippen dadurch bewirkt, dass ein Profilrad (44) der Kippeinheit (42b, 44) mit einem Führungselement (48) der Ablenkeinheit (18) in Eingriff steht, und wobei das Profilrad (44) durch Ankopplung an den Antrieb (28) über ein Getriebe (42) die Drehbewegung des Antriebs (28) mit einer Untersetzung mitvollzieht **dadurch gekennzeichnet,**
**dass** mehrere Abtastebenen abgetastet werden, indem das Profilrad (44) als Kurvenscheibe, die mehrere Segmente mit jeweils konstantem, aber zwischen den Segmenten unterschiedlichem Radius sowie Verstellbereichen dazwischen aufweist, oder als Höhenprofilrad ausgebildet ist, das in Bereiche jeweils gleicher Höhe segmentiert ist, wobei diese Höhe von Segment zu Segment variiert.

## Claims

1. An optoelectronic sensor (10), in particular a laser scanner, for detecting objects in a monitoring area (20) having more than one scanning plane, the sensor (10) comprising a light transmitter (12) for transmitting a light beam (16), a drive (28) for generating a rotational movement, a deflection unit (18) rotatable by the drive (28) about an axis of rotation (30) for periodically deflecting the light beam (16), a tilt unit (42b, 44) coupled to the drive (28) for tilting the deflection unit (18) with the rotational movement, a light receiver (26) for generating a reception signal from the light beam (22) remitted or reflected in the monitoring area (20) as well as an evaluation (52) which is configured to detect the objects based on the reception signal, wherein the tilt unit (42b, 44) comprises a profile wheel (44) whose profile is engaged with a guiding member (48) of the deflection unit (18) and thus generates the tilt movement, and wherein the profile wheel (44) is coupled to the drive (28) with a gear mechanism (42) in order to share the rotational movement of the drive (28) with a gear reduction, **characterized in that** the profile wheel (44) is configured as a cam disc having several segments of constant, but between segments different radius with intermediate adjustment regions, or as a height profile wheel which is segmented into regions each of a same height, with the height varying from segment to segment.

2. The sensor (10) according to claim 1,
wherein the gear mechanism (42) is configured as a worm gear having a fixed worm (42a) arranged about the axis of rotation (30) and a gear wheel (42b) of the tilt unit (42b, 44) laterally meshing with the worm (42a).

3. The sensor (10) according to claim 1,
wherein the gear mechanism (42) is configured as a torus gear with a fixed torus wheel (42a) arranged orthogonally to the axis of rotation (30) and comprising a spiral-like tooth arrangement on one wheel surface, and with a gear wheel (42b) of the tilt unit (42b, 44) meshing with the tooth arrangement orthogonally to the torus wheel (42a).

4. The sensor (10) according to claim 2 or 3,
wherein the profile wheel (44) is configured as a cam disk and rotates on one axis with the gear wheel (42b).

5. The sensor (10) according to claim 1,
wherein the gear mechanism (42) is configured as a spur gear having a fixed first gear wheel (42a) arranged about the axis of rotation (30) and an adjacent second gear wheel (42b) which rotates about an axis parallel to the axis of rotation (30) by meshing with the first gear wheel (42a).

6. The sensor (10) according to claim 5,
wherein the profile wheel (42) is configured as a height profile wheel and rotates on one axis with the second gear wheel (42b), wherein in particular the height profile wheel is integrally made with the second gear wheel (42b).

7. A method for detecting objects in a monitoring area (20) having more than one scanning plane, wherein a light beam (16) is transmitted and a reception signal is generated from the light beam (22) reflected or remitted in the monitoring area (20), the reception signal being evaluated to detect the objects, wherein the light beam (16) periodically scans the monitoring area (20) by means of a deflection unit (18) which is set into rotational movement by a drive (28) and at the same time is tilted by a tilt unit (42b, 44) coupled to the drive (28), wherein the rotational movement effects the tilt in that a profile wheel (44) of the tilt unit (42b, 44) is engaged with a guiding member (48) of the deflection unit (18), and wherein the profile wheel (44) shares the rotational movement of the drive (28) with a gear reduction by being coupled to the drive (28) with a gear mechanism (42),
**characterized in that** several scanning planes are scanned **in that** the profile wheel (44) is configured as a cam disc having several segments of constant, but between segments different radius with intermediate adjustment regions, or as a height profile wheel which is segmented into regions each of a same height, with the height varying from segment to segment.

## Revendications

1. Capteur optoélectronique (10), en particulier scanner à laser, pour la détection d'objets dans une zone de surveillance (20) comportant plus d'un plan de palpage, qui comprend un émetteur de lumière (12) pour émettre un rayon de lumière (16), un entraînement (28) pour engendrer un mouvement de rotation, une unité de déflexion (18) mise en rotation par l'entraînement (28) autour d'un axe de rotation (30) pour la déflexion périodique du rayon de lumière (16), une unité de basculement (42b, 44) couplée à l'entraînement (28) pour faire basculer l'unité de déflexion (18) avec le mouvement de rotation, un récepteur de lumière (26) pour engendrer un signal de réception à partir du rayon de lumière (22) réémis ou réfléchi dans la zone de surveillance, ainsi qu'une unité d'évaluation (52) qui est réalisée pour la détection des objets au moyen du signal de réception,
dans lequel l'unité de basculement (42b, 44) comprend une roulette profilée (44) dont le profil est en engagement avec un élément de guidage (48) de l'unité de déflexion (18) et engendre ainsi le mouvement de basculement, et dans lequel la roulette profilée (44) est accouplée à l'entraînement (28) via un mécanisme (42) afin de suivre ainsi le mouvement de rotation de l'entraînement (28) avec une démultiplication,
**caractérisé en ce que**
la roulette profilée (44) est réalisée comme un disque à cames, qui comprend plusieurs segments avec chacun un rayon constant, mais des rayons différents entre les segments, ainsi que des zones de transition entre ceux-ci, ou bien est réalisée sous forme de roulette profilée en hauteur, qui est segmentée en régions ayant respectivement la même hauteur, ladite hauteur variant de segment à segment.

2. Capteur (10) selon la revendication 1,
dans lequel le mécanisme (44) est réalisé sous la forme d'un mécanisme à vis tangente avec une vis sans fin (42a) stationnaire agencée autour de l'axe de rotation (30), et une roue dentée (42b) de l'unité de basculement (42b, 44) qui s'engage latéralement dans la vis sans fin (42a).

3. Capteur (10) selon la revendication 1,
dans lequel le mécanisme (42) est réalisé sous la forme d'un mécanisme torique avec une roulette torique (42a) stationnaire agencée perpendiculairement à l'axe de rotation (30), qui présente sur une surface de la roulette un profil denté de forme spiralée, et une roue dentée (42b) de l'unité de basculement (42b, 44) qui s'engage dans le profil denté perpendiculairement à la roulette torique (42a).

4. Capteur (10) selon la revendication 2 ou 3,
dans lequel la roulette profilée (44) est réalisée sous forme de disque à cames et est en rotation sur un axe avec la roue dentée (42b).

5. Capteur (10) selon la revendication 1,
dans lequel le mécanisme (42) est réalisé comme un mécanisme à pignon droit avec une première roue dentée (42a) stationnaire agencée autour de l'axe de rotation (30) et une seconde roue dentée (42b) agencée à côté de la première et qui est en rotation, en raison de l'engagement dans la première roue dentée (42a), autour d'un axe parallèle à l'axe de rotation (30).

6. Capteur (10) selon la revendication 5,
dans lequel la roulette profilée (44) est réalisée sous forme de roulette profilée en hauteur et est en rotation sur un axe avec la seconde roue dentée (42b), et dans lequel en particulier la roulette profilée en hauteur et la seconde roue dentée (42b) sont réalisées d'une seule pièce.

7. Procédé pour la détection d'objets dans une zone de surveillance (20) comportant plus d'un plan de palpage, dans lequel on émet un rayon de lumière (16) et, à partir du rayon de lumière (22) réémis ou réfléchi dans la zone de surveillance (20), on engendre un signal de réception et on l'évalue, afin de détecter des objets, dans lequel le rayon de lumière (16) palpe périodiquement la zone de surveillance (20) au moyen d'une unité de déflexion (18), laquelle est mise en rotation par un entraînement (28) et simultanément basculée au moyen d'une unité de basculement (42b, 44) accouplée à l'entraînement (28), dans lequel le mouvement de rotation provoque le basculement du fait qu'une roulette profilée (44) de l'unité de basculement (42b, 44) est en engagement avec un élément de guidage (48) de l'unité de déflexion (18), et dans lequel la roulette profilée (44) suit le mouvement de rotation de l'entraînement (28) avec une démultiplication par accouplement à l'entraînement (28) via un mécanisme (42),
**caractérisé en ce que**
plusieurs plans de palpage sont palpés du fait que la roulette profilée (44) est réalisée comme un disque à cames qui comprend plusieurs segments ayant chacun un rayon constant mais des rayons différents entre les segments, ainsi que des zones de transition entre ceux-ci, ou bien comme une roulette profilée en hauteur qui est segmentée en régions ayant chacune la même hauteur, cette hauteur variant de segment à segment.
